# EUROPEAN PATENT APPLICATION

(11) **EP 4 592 943 A1**
(43) Date of publication of application: **30.07.2025**
(21) Application number: 23868076.3
(22) Date of filing: 08.09.2023
(51) Int. Cl.: G06T 7/00, G06T 7/11

(54) **IMAGE PROCESSING METHOD AND IMAGE PROCESSING PROGRAM**

(30) Priority: 22.09.2022 JP 2022151608
(71) Applicant: Resonac Corporation, Tokyo 105-7325 (JP)
(72) Inventor: UEDA, Kazuki, Tokyo 105-8518 (JP); OKANO, Yu, Tokyo 105-8518 (JP); HASHIMOTO, Shuki, Tokyo 105-8518 (JP); TAKEMOTO, Shimpei, Tokyo 105-8518 (JP); OKUNO, Yoshishige, Tokyo 105-8518 (JP); KOBAYASHI, Momoko, Tokyo 105-8518 (JP); NAKAMURA, Seita, Tokyo 105-8518 (JP); KOBAYASHI, Kumiko, Tokyo 105-8518 (JP)
(74) Representative: Strehl & Partner mbB
(86) International application number: PCT/JP2023/032915
(87) International publication number: WO 2024/062953

(57) **Abstract**

Spheroid regions are accurately acquired from an image including, as imaging targets, spheroids of which contours are not homogeneous. An image processing method of the present invention includes an image acquiring step of acquiring an image including spheroids as imaging targets, a binarization step of binarizing the image acquired, to obtain a binarized image, a regional division step of regionally dividing the binarized image, to obtain spheroid candidate regions, and an ellipse approximation step for applying ellipse approximation to the spheroid candidate regions.

## Description

### TECHNICAL FIELD

The present disclosure relates to an image processing method and an image processing program.

### BACKGROUND ART

For example, there is a case where imaging is performed on a sample such as cells cultured in a container, for the purpose of quantitative measurement of the number and size of the cells. For this purpose, imaging may be performed with the introduction of fluorescent reagents or the like into the cells. However, such an operation may damage the cells. On the other hand, it may be necessary to perform imaging and measurement in a non-invasive manner for continuous culture, observation, and the like.

For example, PTL 1 is proposed in order to meet such a need. This technique includes a first step of acquiring an original image including, as an imaging target, a cell or a cell structure in which a plurality of cells are gathered, a second step of performing band-pass filtering of the original image such that spatial frequency components that are outside a band defined in accordance with the width of the contour of the imaging target are relatively attenuated with respect to spatial frequency components that are within the band, a third step of delimiting regions having a density higher than a predetermined threshold value as first regions and the remaining region as a second region in the image that has gone through the second step, a fourth step of changing a portion of the second region that is sandwiched between the first regions to the first region to connect the first regions sandwiching the second region in the image that has gone through the third step, a fifth step of changing any closed region that is in the second region and that is surrounded by the first region to the first region in the image that has gone through the fourth step, and a sixth step of dividing any of the first regions that has a constriction into a plurality of parts at the position of the constriction in the image that has gone through the fifth step.

### CITATION LIST

### PATENT LITERATURE

PTL 1: Japanese Patent Application Laid-Open Publication No. 2020-9217

### SUMMARY OF THE INVENTION

### TECHNICAL PROBLEM

The technique disclosed in PTL 1 is promising when parameters to be used in the filter are known ones, but is generally not applicable to a case where parameters are unknown. In addition, it is difficult to acquire all regions by one image analysis depending on the degree of color unevenness in the image and the degree of variation in the size of the targets. For this problem, it is possible to acquire regions irrespective of the size of the targets or color unevenness in the image, by performing image analyses a plurality of times by generating images by using the average color of the background.

An object of the present disclosure is to acquire spheroid regions accurately from an image including, as imaging targets, cell structures of which the contours are not homogeneous (hereinafter, such cell structures are referred to generically as "spheroids").

### SOLUTION TO THE PROBLEM

An image processing method according to a first embodiment of the present disclosure includes:
an image acquiring step of acquiring an image including spheroids as imaging targets;
a binarization step of binarizing the image acquired, to obtain a binarized image;
a regional division step of regionally dividing the binarized image, to obtain spheroid candidate regions; and
an ellipse approximation step of applying ellipse approximation to the spheroid candidate regions.

A second embodiment of the present disclosure is the image processing method according to the first embodiment, further including:
an entire image average color acquiring step of acquiring an average color of an entirety of the image before being binarized; and
a background region average color acquiring step of acquiring an average color of a background region of the image, which is the image to which the ellipse approximation has been applied; and
a determination step of comparing the average color of the entirety of the image with the average color of the background region.

A third embodiment of the present disclosure is the image processing method according to the second embodiment, wherein the background region average color acquiring step includes:
a second binarization step of binarizing the image to which the ellipse approximation has been applied;
an expansion step of expanding a white region of a binarized image obtained as a result of the second binarization step; and
an average color acquiring step of acquiring an average color of a region in the image to which the ellipse approximation has been applied, the region corresponding to a black region of the binarized image obtained as a result of the expansion step.

A fourth embodiment of the present disclosure is an image processing program causing a computer to execute:
an image acquiring step of acquiring an image including spheroids as imaging targets;
a binarization step of binarizing the image acquired, to obtain a binarized image;
a regional division step of regionally dividing the binarized image, to obtain spheroid candidate regions; and
an ellipse approximation step of applying ellipse approximation to the spheroid candidate regions.

### ADVANTAGEOUS EFFECTS OF THE INVENTION

According to the present disclosure, it is possible to obtain spheroid regions accurately from an image including spheroids, of which the contours are not homogeneous, as imaging targets.

### BRIEF DESCRIPTION OF THE DRAWINGS

[FIG. 1] FIG. 1 is a flowchart illustrating image processing according to an embodiment.
[FIG. 2] FIG. 2 is a configuration example of a computer device for executing image processing according to an embodiment.
[FIG. 3] FIG. 3 is a flowchart illustrating a background region average color acquiring step.
[FIG. 4] FIG. 4 is a first diagram schematically illustrating an example of image changes associated with processing.
[FIG. 5] FIG. 5 is a second diagram schematically illustrating an example of image changes associated with processing.

### DETAILED DESCRIPTION OF THE INVENTION

Hereinafter, an embodiment of an image processing method according to the present invention will be described. The image processing according to this embodiment is a process of dividing an image acquired by imaging a cell structure cultured in a culture solution into a region of the cell structure and a remaining region and outputting a result image. The image processing is performed on an unprocessed original image acquired by an imaging device equipped with an imaging function for imaging a sample containing spheroids. The imaging device may perform this image processing as one post-processing of the image data after imaging, or a computer device receiving the image data from the imaging device or from an appropriate memory means may perform the image processing.

Hereinafter, an embodiment in which a general-purpose computer device executes the image processing according to the present embodiment on original image data generated as a result of an already performed imaging will be described as an example.

The image that is the target of the image processing according to the present invention includes spheroids as the imaging target. The term "spheroid" as used herein means a cell structure in which a plurality of cells are gathered into an approximately spherical shape, but may encompass a cell that appears as a closed curve having a rough outline that is relatively smooth, such as a cell that expresses an approximately spherical or spheroidal shape by itself in a culture solution. For example, spheroids to be imaged are contained in a dispersed state in a culture solution system in which they are grown. The culture solution containing spheroids constitutes a sample while being contained in a transparent sample container. In this case, imaging of the spheroids is performed through the sample container containing the culture solution.

The configuration of the imaging device is not particularly limited, and the imaging device needs only to have a function for imaging a cultured sample containing spheroids together with the culture solution and outputting the image as digital image data. It is preferable that the image is a bright-field image. As the computer device, one that has a general hardware configuration commercialized as, for example, a personal computer can be used. A detailed description of these hardware components will be omitted below.

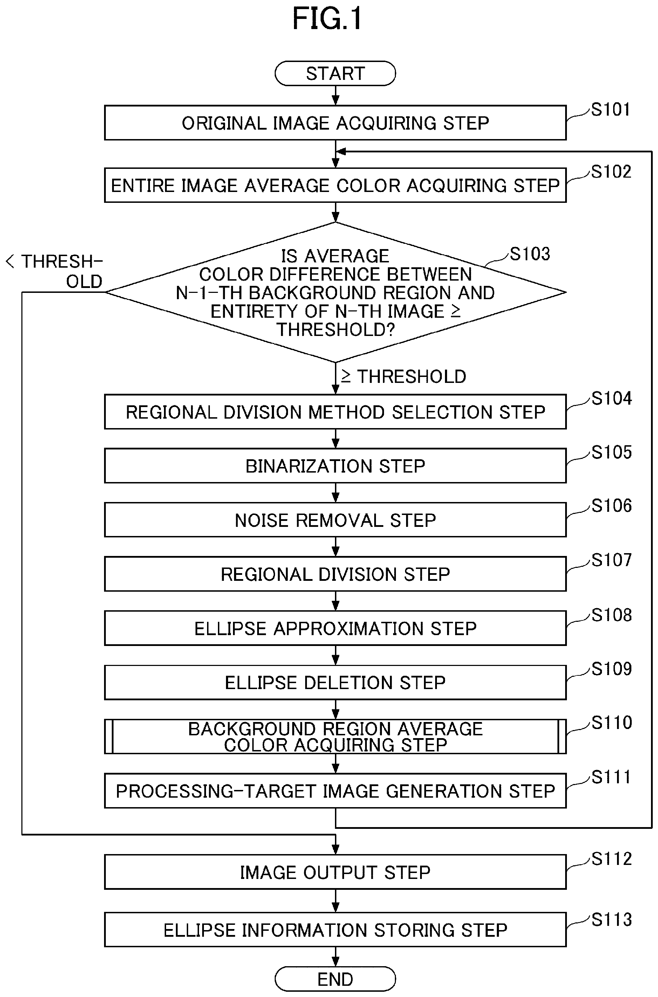

FIG. 1 is a flowchart illustrating the image processing according to the present embodiment. First, an outline of the image processing according to the present embodiment will be described with reference to FIG. 1, and then the specific contents of the image processing will be described in detail.

The computer device acquires an original image obtained by bright-field imaging a spheroid-containing sample in a culture solution using a suitable imaging device under suitable imaging conditions (step S101). The original image shall include the entirety of at least one spheroid as the imaging target. In other words, the imaging magnification is set to include the entirety of at least one spheroid. Thus, the original image may include spheroids, which are the target of detection, and other minute cells, debris, the background, and the like.

The image processing of the present embodiment is particularly suitable for an image including spheroids as the imaging target. Such a type of cells and the like appear with nonuniform sizes or shapes due to the difference in the growing degree of the cells. Accurate detection of such cells and the like leads to accurate extraction of regions of the cells and the like.

The computer device acquires the entire image average color from the original image acquired in step S101 or a processing-target image generated in step S111 (step S102). Hereinafter, the original image acquired in step S101 and the processing-target image generated in step S111 are collectively referred to as the "processing-target image". The entire image average color can be acquired as the arithmetic average of the RGB's R values of the pixels. The entire image average color may be acquired by calculating one of the RGB values, one of the HSV values, or a combination thereof. The entire image average color acquired in step S102 may be used in the determination process to be performed next in step S103.

In a case where this is the first time the average color of an entire image is acquired, i.e., in a case where the average color is acquired from the original image acquired in step S101, the determination process in step S103 is not performed, and the flow proceeds to the next step S104. The process for acquiring the average color of the entirety of the processing-target image generated in step S111 in the second and following cycles will be described later.

Next, the computer device selects a regional division method (step S104). Examples of regional division methods include a watershed method, a contour detection method, and the like. The selection of the regional division method needs only to be performed before the regional division process of step S107 described later, and the timing to select the regional division method is not limited as long as it is before the regional division process.

In the present embodiment, spheroid regions are acquired through a binarization process (step S105), a regional division process (step S107), and an ellipse approximation process (step S108).

In the binarization process, the computer device delimits the processing-target image into high density regions having a density higher than a predetermined density threshold and a low density region having a density lower than the predetermined density threshold (step S105). A single density (e.g., black and white) is imparted to each of the high density regions and the low density region. Thus, a binarized image, which results from binarizing the processing-target image, is obtained. By the image being binarized, a spheroid is represented as a high density closed region surrounded by the low density background region. As the binarization process, Otsu's binarization or binarization using an appropriate threshold can be employed.

The closed region surrounded by the contour extracted in this way corresponds to the interior of a spheroid. The original image might include objects corresponding to small cells other than detection-target spheroids, debris, and the like. In order to delete these objects, any objects of which a morphological feature parameter falls within a predetermined deletion condition are deleted.

Specifically, the computer device deletes an object of which the area, which serves as the parameter, is smaller or larger than a predetermined value (a noise removal step, step S106). The deletion of an object here means changing an object that has been binarized as the high density region to the same low density region as the background region.

Next, the computer device performs the regional division process using the regional division method selected in step S104 (step S107). This regional division process is a process for separating a plurality of spheroids and extracting them as spheroid candidate regions in a case where the object extracted through the processes of steps S105 and S106 described above is an object in which the plurality of spheroids are connected. Such connection can occur in both of a case where a plurality of spheroids are actually in contact with each other in the sample and a case where they are separated in the sample but appear to overlap each other when seen in the imaging direction. By separating connected spheroids from each other in the image by the regional division process, it is possible to acquire spheroid candidate regions. By performing this regional division process, it is possible to reduce errors in calculating the number of spheroids in the image, as well as the size, the area, and the like of each spheroid.

Next, the computer device performs the ellipse approximation process (step S108). In the ellipse approximation process, ellipse approximation is applied to the spheroid candidate regions extracted by the regional division process of step S107. As the ellipse approximation, an ellipse equation is identified by, for example, the least squares method such that the difference between the contour of a spheroid candidate region and the ellipse to be applied becomes small. By performing this ellipse approximation process, it is possible to reduce errors in calculating the number of spheroids in the image, as well as the size, the area, and the like of each spheroid.

Next, the computer device performs an ellipse deletion process (step S109). In this ellipse deletion process, the ellipse that is applied to a spheroid candidate region to which the ellipse approximation is applied in step S108 is deleted, provided that the applied ellipse is not appropriate. Specifically, if there exists a spheroid candidate region to which any ellipse that should be excluded from extraction targets is applied, the ellipse is excluded from extraction targets based on, for example, whether the area or the flatness of the ellipse is smaller or larger than a predetermined value. Through the ellipse deletion process, any spheroid candidate region to which any undeleted ellipse is applied is acquired as a spheroid region.

Next, the computer device performs a background region average color acquiring process on the spheroid regions acquired in step S109 (step S110). The background region average color acquiring process, which will be described in detail later, is a process for calculating the average color of a part of the processing-target image that remains as a result of excluding the spheroid regions from the processing-target image through a binarization process and an expansion process.

Next, the computer device generates a new processing-target image in which the spheroid regions acquired from the processing-target image through steps S108 and S109 are solidly painted with the background region average color acquired in step S110 (step S111). Next, the flow returns to step S102.

In step S103 in the second and following cycles, the entire image average color acquired in step S102 is compared with the background region average color acquired in step S110, to determine whether or not the difference between the average colors is greater than or equal to a threshold value. In a case where the difference between the average colors is greater than or equal to the threshold value, the flow proceeds to step S104. In a case where the difference between the average colors is less than the threshold value, the flow proceeds to step S112. The difference between the average colors being less than the threshold value means that there is no spheroid candidate region left that may be extracted from the processing-target image by the processes of steps S105 and S106.

The average color of the background region of an (N-1)-th processing-target image (which is the original image of the first cycle when this is the second cycle of the processing repetition, and the processing-target image of the second cycle when this is the third cycle of the processing repetition) may be compared with the average color of the entirety of the N-th processing-target image (which is the processing-target image of the second cycle when this is the second cycle of the processing repetition, and the processing-target image of the third cycle when this is the third cycle of the processing repetition).

The step of determining the difference between the average colors may be performed after step 111 instead of after step S102, such that the average color of the entirety of the N-th processing-target image before being subjected to the processes from step S102 to step S111 may be compared with the average color of the background region of the N-th processing-target image after being subjected to the processes from step S102 to step S111, to determine whether the difference between the average colors is less than a threshold value.

Repeating the processes from step S102 to step S111 to repeatedly generate processing-target images in which the acquired spheroid regions are integrated with the background region enables spheroid regions to be acquired with a good accuracy.

The computer device outputs an image obtained by illustrating the spheroid regions obtained through the above processes on the original image (step S112). Specifically, the computer device outputs an image in which the ellipses applied to the acquired spheroid regions are displayed while being superimposed on the original image. The display for identifying the spheroid regions is not limited to the display of the ellipses described above. For example, an image in which the visibility of the spheroid regions in the original image is enhanced by applying various processes to the spheroid regions, such as coloring of the spheroid regions, emphasizing of the contours, and the like may be the output image.

The computer device stores ellipse information such as quantitative values of the spheroid regions acquired through the above processes in a storage 15 described later (step S113). Specifically, the number of spheroid regions, the area, the length of the contour line, the circularity, and the aspect ratio are stored as numerical values. In addition to the above, the number of ellipses, the circularity, the longer diameter, the shorter diameter, the center coordinates, and the like obtained in the ellipse deletion process of step S109 may be stored. Further, statistical values may be calculated based on these numerical values. The values including the calculated statistical values may be output as a file of, for example, Comma Separated Values (CSV), Excel (registered trademark), or the like.

In this way, either or both of the output image generated in step S112 and the statistical values generated in step S113 are displayed and output on, for example, a display unit 17 described later, so that the result of the image processing is presented to the user. Either or both of the output image and the statistical values may be output by printing or may be output by transmission to an external device (not illustrated).

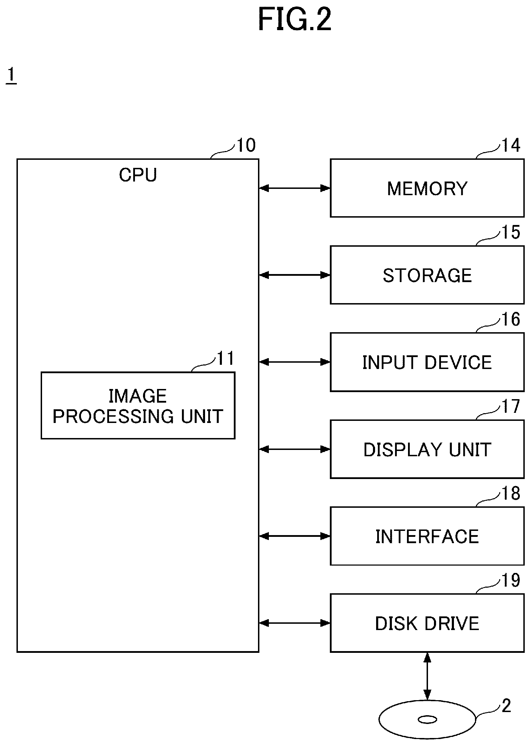

FIG. 2 is a configuration example of the computer device for executing the image processing according to the present embodiment. A computer device 1 has a general configuration as a personal computer, and includes, for example, a Central Processing Unit (CPU) 10, a memory 14, a storage 15, an input device 16, a display unit 17, an interface 18, and a disk drive 19.

By executing a previously prepared image processing program, the CPU 10 realizes an image processing unit 11 software-wise as a function block for executing the image processing described above. A dedicated hardware component for realizing the image processing unit 11 may be provided. The memory 14 temporarily stores various types of data generated in the calculation process of the CPU 10. In addition to the image processing program to be executed by the CPU 10, the storage 15 stores image data of the original image, image data after being processed, the ellipse information described above, and the like on a long-term basis.

The input device 16 is configured to receive an instruction input from an operator, and includes, for example, a mouse, a keyboard, and the like. The display unit 17 is, for example, a liquid crystal display having a function of displaying an image, and displays the original image, an image after being processed, and various information such as a message to the operator and the like. A touch panel in which the input device and the display unit are integrated may be provided.

The interface 18 performs various data exchanges with an external device via a telecommunications line. The disk drive 19 receives an external recording disk 2 in which various data such as image data, the image processing program, and the like are recorded. The image data, the image processing program, and the like stored in the recording disk 2 are read by the disk drive 19 and stored in the storage 15. The disk drive 19 may have a function for writing data generated in the computer device 1 into the recording disk 2.

The image processing program for causing the computer device 1 to execute the image processing of the present embodiment may be configured to be read out from the recording disk 2, in which it is recorded, by the disk drive 19 that accesses the recording disk, or may be configured to be supplied from an external device via the interface 18. The same applies to the original image data.

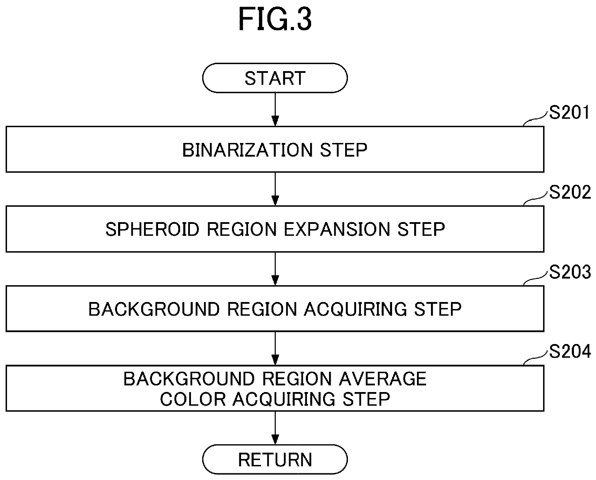

The background region average color acquiring process according to the present embodiment (step S110 of FIG. 1) will be described in detail with reference to FIG. 3.

The computer device performs a binarization process on the image that has been subjected to the processes of steps S108 and S109 (step S201). In the binarization process of step S201, in the same manner as the binarization process of step S105 described above, the computer device delimits the processing-target image into high density regions having a density higher than a predetermined density threshold and a low density region having a density lower than the predetermined density threshold. As the binarization process, Otsu's binarization or binarization using an appropriate threshold can be employed. By this binarization process, the processing-target image is roughly delimited into spheroid regions and a region other than the spheroid regions. Hereafter, the region other than the spheroid regions is treated as a background candidate region.

Next, the computer device performs an expansion process on the spheroid regions (step S202). As the expansion process operation, the spheroid regions are sufficiently expanded into the background candidate region. The spheroid regions are expanded by, for example, 10 pixels such that they expand into the background candidate region. By performing the expansion process in this way, it is possible to completely eliminate the spheroid regions from the background candidate region.

Next, the computer device performs a background region acquiring process (step S203). In the background region acquiring process, the background region is acquired from the processing-target image to which the expansion process has been applied, obtained in step S202. In this way, the background region in the processing-target image is identified.

Next, the computer device acquires the average color of the background region acquired in step S203 (step S204). The average color can be acquired in the same manner as in step S102 described above. By calculation of the average value of the background region of the processing-target image, the average color of the background region is acquired. The average color of the background region thus obtained is used in step S103 described above.

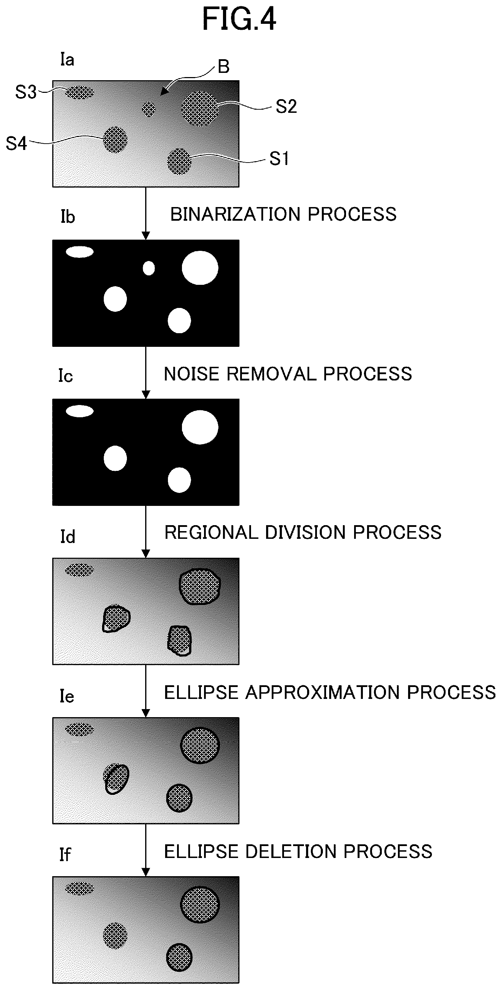

FIG. 4 schematically illustrates an example of image changes associated with the image processing of the present embodiment.

An image Ia illustrated in FIG. 4 schematically illustrates an example of the image acquired in step S101. In the second and following cycles of repeating the processes from step S102 to step S111, the processing-target image generated in step S111 serves as the image Ia. In the image Ia, spheroids S1 to S4, which are the detection targets, are distributed in a background B that is substantially uniform. The spheroids S1 to S4 have an outline shape that is roughly circular or elliptic. Although the spheroids S1 to S4 have a relatively high density in the interior thereof as well in FIG. 4, the texture of the interior of the spheroids may be any texture. The image Ia has a density unevenness that appears as the upper right part having a higher background density.

An image Ib schematically illustrates an example of the image resulting from the binarization process (step S105) being applied to the image Ia. By the binarization process, the image is delimited into regions having a relatively high density and a region having a low density. As illustrated as the image Ib in FIG. 4, the spheroids S1 to S4 are delimited as high density regions that are illustrated in white in the drawing. On the other hand, the remaining region is delimited as a low density region that is illustrated in black in the drawing and is thus virtually deleted from the image.

Next, a small region (noise) is deleted from the binarized image Ib (step S106). An image Ic is an example of the image resulting from deleting a small region from the image Ib. By deletion of any object that falls within a predetermined deletion condition, such as the length or area being less than a predetermined value, the circularity being less than a predetermined value, or the like, from the image Ib, an object other than the detection-target spheroids S1 to S4 is deleted.

Next, the regional division process (step S107) is performed on the image Ic that has gone through the noise deletion. The regional division is a regional division process performed on the high density regions, and, for example, a watershed method can be applied. An image Id is an example of the image resulting from each of the spheroids S1 to S4 included in the image Ic being acquired as an independent spheroid region.

Next, the ellipse approximation process (step S108) is applied to the image Id that has gone through the regional division. The contour line obtained by the regional division by the watershed method is not always able to definitively capture the spheroid. Therefore, using the least squares method, the contour line is approximated with an ellipse. As a result, an approximating ellipse is identified for each spheroid. By identification of the approximating ellipses, spheroid candidate regions are identified, which has the effect of reducing errors in calculating the number of spheroids in the image, as well as the size, the area, and the like of each spheroid. An image Ie is an example of the image that results from the application of the ellipse approximation process to the image Id.

Next, the ellipse deletion process (step S109) is applied to the image Ie that has gone through the ellipse approximation process. An image If is an example of the image resulting from ellipse deletion from the image Ie. By deletion of any ellipse that falls within a predetermined deletion condition, such as the length or the area being less than a predetermined value, the circularity being less than a predetermined value, or the like, from the image Ie, spheroid regions are identified.

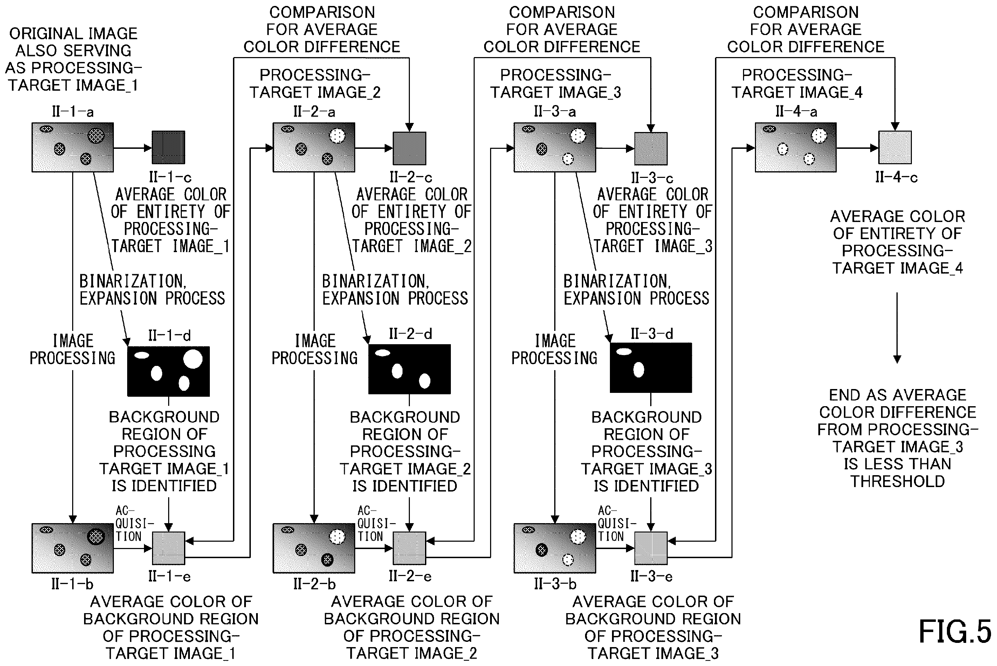

FIG. 5 schematically illustrates an example of image changes associated with the image processing of the present embodiment. FIG. 5 illustrates in detail the repeating processing including the handling of the average color of an entire image and the average color of a background region.

By application of steps S102 to S109 to an image II-1-a acquired in step S101, an image II-1-b in which a spheroid region is identified is obtained. In the image II-1-b, one spheroid in the upper right part of the image is identified as a spheroid region. An image II-1-c is obtained as a result of acquiring the average color of the entirety of the image II-1-a. An image II-1-d is obtained as a result of application of steps S201 and S202 to the image II-1-a. That is, by application of the binarization process (step S201) and the expansion process (step S202) on the processing-target image, the background region is identified. An image II-1-e is obtained as a result of application of steps S201 through S204 to the image II-1-a. That is, the average color of the background region of the processing-target image is acquired.

An image II-2-a is a processing-target image for handling a failure to completely identify spheroid regions from the image through the series of processes from step S102 to step S111.

By newly applying the processes from step S102 to step S111 to the image II-2-a, an image II-2-b is obtained. In the image II-2-b, the spheroid at the lower right part of the image is newly identified as a spheroid region. Here, a background region average color of an image II-2-e is applied to the spheroid region identified in the image II-2-b.

By repeating the processes from steps S102 to S111 in the same manner afterwards, spheroid regions in the processing-target image are successively identified.

Although the determination process of step S103 is omitted from the above description of the image processing, the determination process of step S103 is performed every time the average color of the entirety of an image is acquired. In the example of FIG. 5, regarding an image II-4-a, the difference between the average color of the entirety of an image II-4-c and the background region average color of an image II-3-e is less than a predetermined threshold, so the flow branches to step S112 and the image processing is terminated.

In the above embodiment, the low density region of the original image is expressed by black and the high density regions thereof are expressed by white, respectively, as the image resulting from the binarization process. However, they may be reversed.

In the above embodiment, the result of the image processing is output by displaying so as to be presented to the user, but the manner in which the result of extracting a region such as a cell is to be used is not limited to the above, and is optional.

Although the watershed method is applied as the regional division process in the above embodiment, other regional division techniques can be applied.

In the above embodiment, the regional division process is performed by a general-purpose computer device 1. However, for example, an imaging device may be embedded with the process function as described above. Moreover, an existing imaging device may be functionally enhanced by being additionally packaged with a program for performing the regional division process of the present embodiment.

The original image may be an image obtained by bright-field imaging of cells and the like. In general, cells are nearly transparent and have a small refractive index difference from the culture medium in which the cells are cultured. Therefore, it is difficult to visually distinguish the cells and the like from other regions in an image obtained by bright-field imaging. When the present invention is applied to such an image, the regions of the cells and the like in the image can be extracted favorably and stably. Moreover, because it is possible to use an image obtained by bright-field imaging involving no labeling such as staining, it is possible to observe and evaluate the cells and the like non-invasively.

Although the image processing method of the present disclosure has been described while targeting an image including spheroids as the imaging target, the imaging target is not limited to spheroids, and may be particles containing an inorganic material as a constituent. The imaging target may also be a surface of a coated member formed by coating a surface of a base material with particles.

The present application claims priority to Japanese Patent Application No. 2022-151608 filed with the Japan Patent Office on September 22, 2022, the content of which is hereby incorporated by reference in its entirety.

### REFERENCE SIGNS LIST

1: computer device
2: recording disk (recording medium)
Ia: original image
S1 to S4: spheroid
S101: original image acquiring step
S102: entire image average color acquiring step
S103: determination step
S104: regional division method selection step
S105: binarization step
S106: noise removal step
S107: regional division step
S108: ellipse approximation step
S109: ellipse deletion step
S110: background region average color acquiring step
S111: processing-target image generation step
S112: image output step
S113 ellipse information storing step
S201: binarization step
S202: spheroid region expansion step
S203: background region acquiring step
S204: background region average color acquiring step

## Claims

1. An image processing method, comprising:
an image acquiring step of acquiring an image including spheroids as imaging targets;
a binarization step of binarizing the image acquired, to obtain a binarized image;
a regional division step of regionally dividing the binarized image, to obtain spheroid candidate regions; and
an ellipse approximation step of applying ellipse approximation to the spheroid candidate regions.

2. The image processing method according to claim 1, further comprising:
an entire image average color acquiring step of acquiring an average color of an entirety of the image before being binarized;
a background region average color acquiring step of acquiring an average color of a background region of the image, which is the image to which the ellipse approximation has been applied; and
a determination step of comparing the average color of the entirety of the image with the average color of the background region.

3. The image processing method according to claim 2,
wherein the background region average color acquiring step includes:
a second binarization step of binarizing the image to which the ellipse approximation has been applied;
an expansion step of expanding a white region of a binarized image obtained as a result of the second binarization step; and
an average color acquiring step of acquiring an average color of a region in the image to which the ellipse approximation has been applied, the region corresponding to a black region of the binarized image obtained as a result of the expansion step.

4. An image processing program causing a computer to execute:
an image acquiring step of acquiring an image including spheroids as imaging targets;
a binarization step of binarizing the image acquired, to obtain a binarized image;
a regional division step of regionally dividing the binarized image, to obtain spheroid candidate regions; and
an ellipse approximation step of applying ellipse approximation to the spheroid candidate regions.
